# FASCICULE DE BREVET EUROPEEN

(11) **EP 1 954 549 B1**
(45) Date de publication et mention de la délivrance du brevet: **11.11.2015**
(21) Numéro de dépôt: 06842025.6
(22) Date de dépôt: 23.11.2006
(51) Int. Cl.: B62D 27/02, B62D 65/04, B62D 25/02

(54) **ASSEMBLAGE D'ELEMENTS DE TOLE DEFINISSANT UN ENCADREMENT DESTINE A RECEVOIR UN JOINT, SON PROCEDE DE FABRICATION ET APPLICATION AU DOMAINE DE L'AUTOMOBILE**
ANORDNUNG AUS EINE EINFASSUNG ZUR AUFNAHME EINER DICHTUNG DEFINIERENDEN BLECHELEMENTEN, HERSTELLUNGSVERFAHREN DAFÜR UND DEREN ANWENDUNG IN DER AUTOMOBILINDUSTRIE
ASSEMBLY OF SHEET METAL ELEMENTS DEFINING A SURROUND INTENDED TO ACCEPT A SEAL, METHOD OF MANUFACTURE THEREOF AND ITS APPLICATION TO THE FIELD OF MOTOR VEHICLES

(30) Priorité: 01.12.2005 FR 0553679
(43) Date de publication de la demande: 13.08.2008
(73) Titulaire: Peugeot Citroën Automobiles, 78140 Vélizy-Villacoublay (FR)
(72) Inventeur: ARNAUD, Laurent, F-70110 Senargent Mignafans (FR)
(74) Mandataire: Allain, Laurent
(86) Numéro de dépôt international: PCT/FR2006/051214
(87) Numéro de publication internationale: WO 2007/063237

(56) Documents cités:
- WO-A-03/011624
- DE-A1- 10 247 644
- PATENT ABSTRACTS OF JAPAN vol. 1998, no. 10, 31 août 1998 (1998-08-31) -& JP 10 129271 A (KINUGAWA RUBBER IND CO LTD), 19 mai 1998 (1998-05-19)
- PATENT ABSTRACTS OF JAPAN vol. 008, no. 028 (M-274), 7 février 1984 (1984-02-07) & JP 58 185376 A (NISSAN JIDOSHA KK), 29 octobre 1983 (1983-10-29)

## Description

L'invention concerne un assemblage d'éléments de tôle.

L'invention concerne également l'application d'un tel assemblage pour réaliser un encadrement d'organe mobile d'un véhicule automobile tel qu'une porte, une vitre, un toit ouvrant, une entrée de volet ou de coffre, ainsi qu'un véhicule automobile équipé d'un tel assemblage.

L'invention porte également sur un procédé de réalisation d'au moins un élément de tôle de cet assemblage.

Dans les véhicules automobiles, les encadrements de fenêtres, de portes ou de toit ouvrant sont délimités par un assemblage d'au moins une première pièce de carrosserie, ou premier élément de tôle, sur un élément de tôle principal dans lequel ces deux éléments de tôle sont solidairement accolés l'un à l'autre et positionnés l'un par rapport à l'autre par coopération de leurs feuillures respectives dont les bords externes sont susceptibles de recevoir un joint.

Le montage du joint consiste à recouvrir les feuillures respectives des éléments de tôle superposés les uns aux autres.

Cependant, il a été constaté des arrachements du joint lors de son montage, ce dont il résulte notamment une perte de temps pour remplacer le joint et un coût lié à l'utilisation de plusieurs joints pour un même encadrement.

L'invention permet de pallier les inconvénients précités en proposant un assemblage répondant à la description faite précédemment et qui est essentiellement caractérisé en ce qu'au moins une partie du bord externe de la feuillure du premier élément de tôle est biseautée, de façon à ne pas dépasser du bord externe de la feuillure de l'élément de tôle principal.

Il peut être prévu que le bord externe du premier élément de tôle longe une partie rectiligne du bord externe de cet élément de tôle principal mais aussi que le dit assemblage comprenne un deuxième élément de tôle solidairement accolé à l'élément de tôle principal et dont la feuillure coopère avec la feuillure de l'élément de tôle principal, le bord externe de ce deuxième élément de tôle longeant une partie essentiellement arquée du bord externe de cet élément de tôle principal.

De préférence, dans l'assemblage précité, les premier et deuxième éléments de tôle sont des renforts et/ou des doublures.

Avantageusement, les feuillures respectives des éléments de tôle superposés définissent le logement d'un organe mobile.

L'invention porte également sur l'utilisation de l'assemblage décrit ci-avant pour réaliser un encadrement de porte, de vitre, de toit ouvrant, d'entrée de volet ou de coffre d'un véhicule automobile.

L'invention porte également sur un véhicule automobile équipé d'un tel assemblage.

Enfin, l'invention concerne également un procédé de fabrication du premier élément de tôle destiné à être solidairement accolé à l'élément de tôle principal par coopération de leurs feuillures respectives dont les bords externes respectifs sont susceptibles de recevoir un joint, ce procédé étant essentiellement caractérisé en ce qu'il comprend au moins une étape d'emboutissage au cours de laquelle au moins une partie du bord externe de la feuillure du dit premier élément de tôle est biseautée de façon à ne pas dépasser du bord externe de la feuillure de l'élément de tôle principal.

Avantageusement, le biseautage du bord externe de la feuillure du dit premier élément de tôle est effectué lors de l'opération de détourage.

L'invention sera mieux comprise et d'autres buts, avantages et caractéristiques de celle-ci apparaîtront plus clairement à la lecture de la description qui suit et qui est faite au regard des dessins annexés qui représentent des exemples non limitatifs de réalisation de l'interface de l'invention et sur lesquels :
- la figure 1 est une vue de face d'un assemblage de trois éléments de tôle de l'art antérieur au niveau de la partie arquée d'un encadrement de porte,
- la figure 2 est la même vue que celle de la figure 1 et représente un assemblage de trois éléments de tôle selon l'invention,
- la figure 3 est la même vue que celle de la figure 2 sur laquelle les feuillures des trois éléments de tôle de l'assemblage de l'invention sont recouvertes d'un joint.

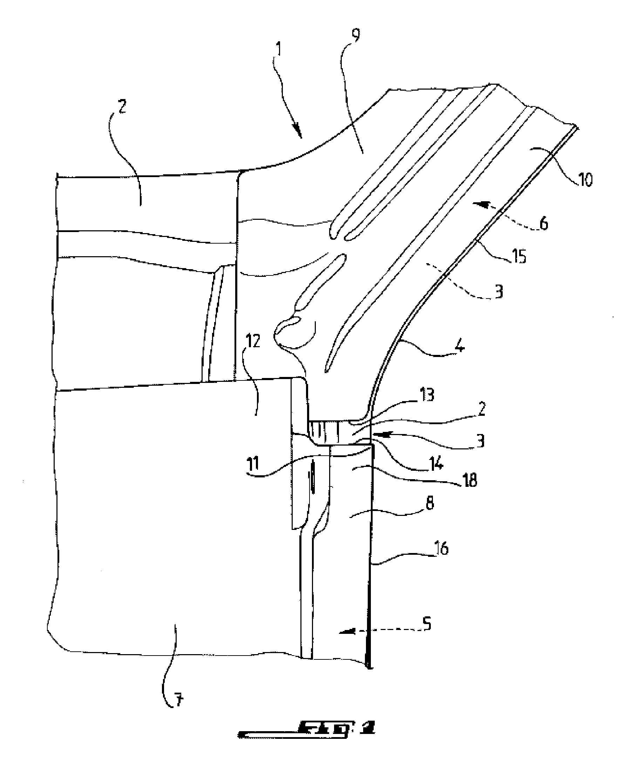

En référence à la figure 1, l'assemblage 1 de l'art antérieur défini une partie essentiellement arquée d'un encadrement, par exemple de porte, dans un véhicule automobile.

Cet assemblage 1 comporte un élément de tôle principal 2 pourvu d'une feuillure 3 dont le bord externe 4 comporte une partie inférieure rectiligne 5 et une partie supérieure arquée 6.

Un premier élément de tôle 7 est solidairement accolé à l'élément de tôle principal 2, par exemple par soudage, le long de la partie inférieure rectiligne 5 du bord externe 4 de l'élément principal de tôle 2.

Ce premier élément de tôle 7 comporte une feuillure 8 de forme conjuguée à celle de la feuillure 3 de l'élément de tôle principal 2.

Ainsi, le positionnement du premier élément de tôle 7 sur et relativement à l'élément de tôle principal 2 s'effectue par engagement de la feuillure 8 de ce premier élément de tôle 7 dans la feuillure 3 de l'élément principal de tôle 2.

L'assemblage 1 comporte également un deuxième élément de tôle 9 qui est solidairement accolé à l'élément de tôle principal 2, par exemple par soudage, le long de la partie arquée 6 du bord externe 4 de cet élément de tôle principal 2.

Comme pour le premier élément de tôle 7, le deuxième élément de tôle 9 comporte une feuillure 10 de forme conjuguée à celle de la feuillure 3 de l'élément de tôle principal 2, ce qui permet de positionner le deuxième élément de tôle 9 sur et relativement à l'élément de tôle principal 2 par engagement de la feuillure 10 de ce deuxième élément de tôle 9 dans la feuillure 3 de l'élément principal de tôle 2.

Le premier élément de tôle 7 comporte une découpe en équerre 11 réalisée en s'étendant sur toute la largeur de sa feuillure 8 de façon que les bords respectifs transversaux des premier 13 et deuxième 14 éléments de tôle proches du bord externe 4 de l'élément de tôle principal 2 se font faces à une certaine distance l'un de l'autre en laissant apparaître la feuillure 3 de l'élément de tôle principal 2 et qu'au delà de cette feuillure 3, une zone 12 est faite de la superposition de l'élément principale de tôle 2 et des premier 7 et deuxième 9 éléments de tôle.

Comme visible sur cette figure 1, le bord externe 15 du deuxième élément de tôle 9 longe la partie arquée - du bord externe 4 de l'élément de tôle principal 2 en restant accolé sur toute sa longueur à la feuillure 3 de l'élément de tôle principal sans dépasser de ce bord externe 4.

En revanche, pour ce qui est du premier élément de tôle 7, la partie supérieure 18^{e} de son bord externe 16 dépasse vers l'extérieur de la partie rectiligne 5 du bord externe 4 de l'élément de tôle principal 2 depuis son bord transversal 14 en formant une discontinuité sur la longueur du bord externe 4 de l'élément de tôle principal 2.

Ce dépassement provient des Intervalles de Tolérance, ou IT, intervenant tant à l'emboutissage de la pièce à raison de ± 1mm que lors des opérations d'assemblage/ferrage à hauteur de ± 1,5 mm.

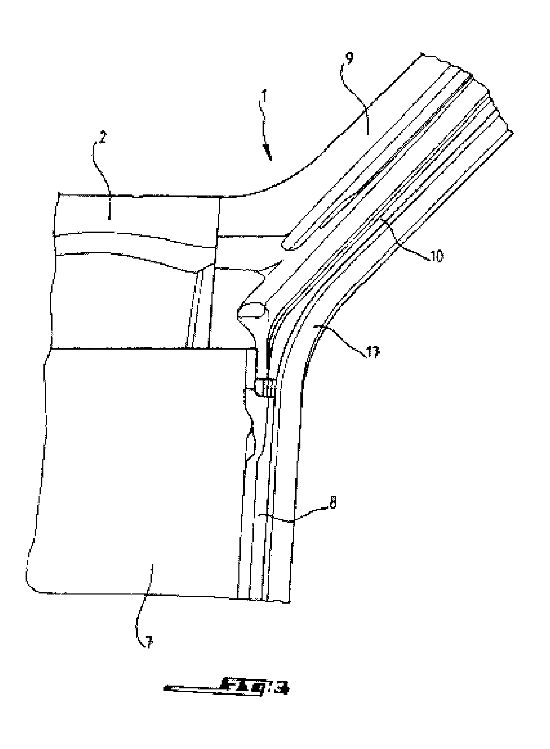

Un tel dépassement du premier élément de tôle 7 relativement à l'élément principal de tôle 2 présente l'inconvénient majeur d'endommager le joint 17 destiné à venir en prise de part et d'autre de la feuillure 3 de l'élément de tôle principal 2, comme représenté sur la figure 3, en recouvrant également les feuillures respectives 8, 10 des premier 7 et deuxième 9 élément de tôle.

En effet, lors du montage de ce joint 17, le dépassement de la partie supérieure 18 du bord externe 16 du premier élément de tôle 7 peut conduire à l'arrachement du joint 17 lui faisant perdre ses propriétés d'étanchéités.

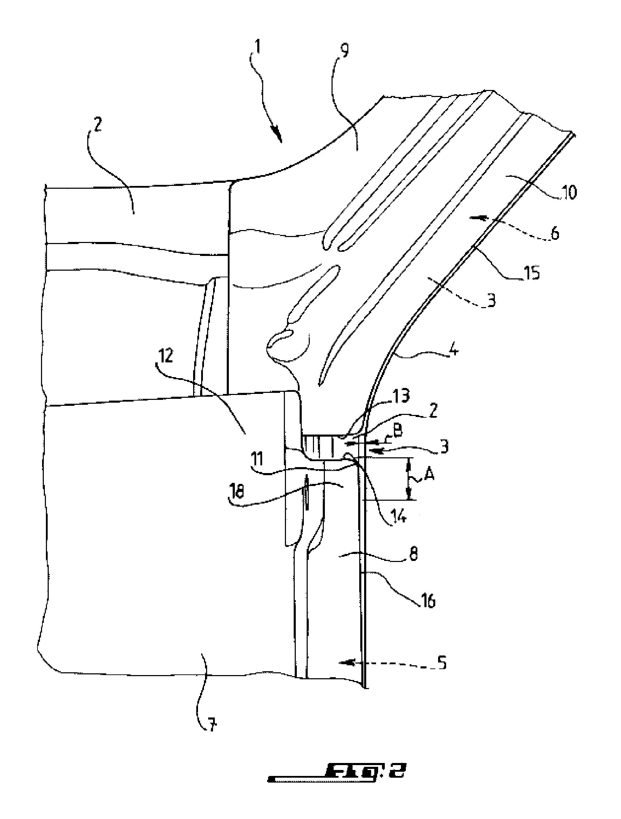

Selon l'invention et en référence à la figure 2, la partie supérieure 18 du bord externe 16 du premier élément de tôle 7 est biseautée de façon à présenter depuis le bord transversal 14 sur une longueur A d'environ 15 mm un espacement d'une largeur B d'approximativement 1,5 mm avec le bord externe 4 de l'élément de tôle principal 2.

De cette façon, le premier élément de tôle 7 ne dépasse pas de l'élément de tôle principal 2 et le bord externe 4 de la feuillure 3 de l'élément de tôle principal 2 ne présente plus de discontinuité ce qui permet de monter le joint 17 sans risque d'endommagement de ce dernier.

Le biseautage du bord externe 16 du premier élément de tôle 7 est effectué dans le plan de sa feuillure 8 et est réalisé lors de son emboutissage et plus particulièrement lors de l'opération de détourage consistant, au cours de cette opération d'emboutissage, à découper les bords éléments de tôle pour obtenir leur forme définitive.

Il peut être également prévu dans une variante non représentée que le bord externe 15 soit également biseauté si ce bord externe 15 venait à dépasser au moins en partie du bord externe 4 de l'élément de tôle principal.

Les premier 7 et deuxième 9 éléments de tôle peuvent être des renforts ou des doublures.

Par ailleurs, l'encadrement défini par l'assemblage d'éléments de tôle de l'invention (1) peut définir un encadrement de tout organe mobile présent dans un véhicule automobile tel qu'une porte, une vitre, un toit ouvrant, une entrée de volet ou de coffre par exemple.

Ainsi, l'assemblage de l'invention autorise le montage sans difficulté et sans risque de dégradation du joint 17.

De plus, l'absence de blocage lors du montage du joint entraîne un gain du temps lors de ce montage mais également par voie de conséquence un gain économique provenant à la fois de la rapidité au montage mais également de l'absence de déchirement du joint.

Enfin, les moyens utilisés pour mettre en oeuvre cet assemblage sont simples, ce dont il résulte qu'ils peuvent être mis en application rapidement et sans surcoût.

## Revendications

1. Assemblage (1) d'au moins un premier élément de tôle (7) sur un élément de tôle principal (2) dans lequel les dits éléments de tôle (7,2) sont solidairement accolés l'un sur l'autre et positionnés l'un par rapport à l'autre par coopération de leurs feuillures respectives (3,8) dont les bords externes accolés l'un sur l'autre (4,16) pour recevoir un joint (17), **caractérisé en ce qu'**au moins une partie (18) du bord externe (16) de la feuillure (8) du premier élément de tôle (7) est biseautée dans le plan de cette feuillure (8), de façon à ne pas dépasser du bord externe (4) de la feuillure (3) de l'élément de tôle principal (2) du fait des Intervalles de Tolérance, ou IT, intervenant tant à l'emboutissage de l'élément à raison de ± 1mm que lors des opérations d'assemblage/ferrage à hauteur de ± 1,5 mm.

2. Assemblage selon la revendication 1, **caractérisé en ce que** le bord externe (16) du premier élément de tôle (7) longe une partie rectiligne (5) du bord externe (4) de cet élément de tôle principal (2), **en ce que** le dit assemblage (1) comprend en outre un deuxième élément de tôle (9) solidairement accolé à l'élément de tôle principal (2) et dont la feuillure (10) coopère avec la feuillure (3) de l'élément de tôle principal (2) et **en ce que** le bord externe (15) de ce deuxième élément de tôle (9) longe une partie essentiellement arquée (5) du bord externe (4) de cet élément de tôle principal (2).

3. Assemblage selon la revendication 2, **caractérisé en ce que** les premier (7) et deuxième (9) éléments de tôle sont des renforts et/ou des doublures.

4. Assemblage selon l'une quelconque des revendications précédentes, **caractérisé en ce que** les feuillures respectives (3,8,10) des éléments de tôle superposés (2,7,9) définissent le logement d'un organe mobile.

5. Encadrement de porte, de vitre, de toit ouvrant, d'entrée de volet ou de coffre d'un véhicule automobile réalisé par un assemblage selon l'une quelconque des revendications précédentes.

6. Véhicule automobile équipé d'un assemblage selon l'une quelconque des revendications 1 à 4.

7. Procédé de fabrication d'un premier élément de tôle (7) destiné à être solidairement accolé à un élément de tôle principal (2) par coopération de leurs feuillures respectives (8,3) dont les bords externes respectifs (4,15) sont susceptibles de recevoir un joint (17), **caractérisé en ce qu'**il comprend au moins une étape d'emboutissage au cours de laquelle au moins une partie (18) du bord externe (16) de la feuillure (8) du dit premier élément de tôle (7) est biseautée de façon à ne pas dépasser du bord externe (4) de la feuillure (3) de l'élément de tôle (2) principal du fait des Intervalles de Tolérance, ou IT, intervenant tant à l'emboutissage de l'élément à raison de ± 1mm que lors des opérations d'assemblage/ferrage à hauteur de ± 1,5 mm.

8. Procédé selon la revendication 7, dans lequel le biseautage du bord externe (16) de la feuillure (8) du dit premier élément de tôle (7) est effectué lors de l'opération de détourage.

## Claims

1. An assembly (1) of at least a first sheet metal element (7) on a main sheet metal element (2), in which assembly said sheet metal elements (7, 2) are firmly held together and positioned with reference to one another through the collaboration of their respective rebates (3, 8), the outer edges (4, 16) of which are held together to receive a seal (17), **characterized in that** at least part (18) of the outer edge (16) of the rebate (8) of the first sheet metal element (7) is chamfered in the plane of this rebate (8) so as not to protrude beyond the outer edge (4) of the rebate (3) of the main sheet metal element (2) due to the tolerance intervals, or TI, involved both on the stamping of the element at ± 1 mm and during the assembly/fitting operations at a height of ± 1.5 mm.

2. The assembly according to claim 1, **characterized in that** the outer edge (16) of the first sheet metal element (7) runs along a rectilinear part (5) of the outer edge (4) of this main sheet metal element (2), **in that** said assembly (1) further includes a second sheet metal element (9) firmly held together with the main sheet metal element (2) and the rebate (10) of which cooperates with the rebate (3) of the main sheet metal element (2) and **in that** the outer edge (15) of this second sheet metal element (9) runs along an essentially curved part (5) of the outer edge (4) of this main sheet metal element (2).

3. The assembly according to claim 2, **characterized in that** the first (7) and second (9) sheet metal elements are reinforcements and/or linings.

4. The assembly according to any one of the preceding claims, **characterized in that** the respective rebates (3, 8, 10) of the superposed sheet metal elements (2, 7, 9) define the housing of a movable member.

5. A frame of a door, window, opening roof, flap inlet or boot inlet of a motor vehicle realized by an assembly according to any one of the preceding claims.

6. A motor vehicle equipped with an assembly according to any one of claims 1 to 4.

7. A method of manufacture of a first sheet metal element (7) intended to be firmly held together with a main sheet metal element (2) by cooperation of their respective rebates (8, 3), the respective outer edges (4, 15) of which are capable of receiving a seal (17), **characterized in that** it includes at least one stamping step, during which at least part (18) of the outer edge (16) of the rebate (8) of said first sheet metal element (7) is chamfered so as not to protrude beyond the outer edge (4) of the rebate (3) of the main sheet metal element (2) owing to tolerance intervals, or TI, involved both on the stamping of the element at ± 1 mm and during the assembly/fitting operations at a height of ± 1.5 mm.

8. The method according to claim 7, in which the chamfering of the outer edge (16) of the rebate (8) of the said first sheet metal element (7) is carried out during the routing operation.

## Patentansprüche

1. Anordnung (1) mindestens eines ersten Blechelements (7) auf einem Hauptblechelement (2), wobei die Blechelemente (7, 2) fest aufeinander angebaut und zueinander durch Zusammenwirken ihrer jeweiligen Falze (3, 8), deren externe Ränder aufeinander angebaut (4, 16) sind, positioniert sind, um eine Dichtung (17) aufzunehmen, **dadurch gekennzeichnet, dass** mindestens ein Teil (18) des äußeren Rands (16) des Falzes (8) des ersten Blechelements (7) in der Ebene dieses Falzes (8) derart abgeschrägt ist, dass er nicht von dem äußeren Rand (4) des Falzes (3) des Hauptblechelements (2) aufgrund der Toleranzintervalle oder IT, die sowohl beim Stanzen des Elements zu ± 1 mm als auch bei Zusammenbau-/Beschlagarbeiten in der Höhe von ± 1,5 mm auftreten, vorsteht.

2. Anordnung nach Anspruch 1, **dadurch gekennzeichnet, dass** der äußere Rand (16) des ersten Blechelements (7) entlang eines geradlinigen Teils (5) des externen Rands (4) dieses Hauptblechelements (2) verläuft, und dass die Anordnung (1) außerdem ein zweites Blechelement (9) umfasst, das fest an das Hauptblechelement (2) angebaut ist und dessen Falz (10) mit dem Falz (3) des Hauptblechelements (2) zusammenwirkt, und dass der äußere Rand (15) dieses zweiten Blechelements (9) entlang eines im Wesentlichen gebogenen (5) Rands des äußeren Rands (4) dieses Hauptblechelements (2) verläuft.

3. Anordnung nach Anspruch 2, **dadurch gekennzeichnet, dass** das erste (7) und das zweite Blechelement (9) Verstärkungen und/oder Auskleidungen sind.

4. Anordnung nach einem der vorhergehenden Ansprüche, **dadurch gekennzeichnet, dass** der jeweilige Falz (3, 8, 10) der überlagerten Blechelemente (2, 7, 9) die Aufnahme eines beweglichen Organs bilden.

5. Rahmen für Tür, Scheibe, Schiebedach, Klappeneingang oder Kofferraum eines Kraftfahrzeugs, der durch eine Anordnung nach einem der vorhergehenden Ansprüche hergestellt wird.

6. Kraftfahrzeug, das mit einer Anordnung nach einem der Ansprüche 1 bis 4 ausgestattet ist.

7. Herstellungsverfahren eines ersten Blechelements (7), das dazu bestimmt ist, fest an ein Hauptblechelement (2) durch Zusammenwirken ihrer Falze (8, 3), deren jeweilige äußere Ränder (4, 15) eine Dichtung (17) aufnehmen können, angebaut zu werden, **dadurch gekennzeichnet dass** es mindestens einen Stanzschritt umfasst, in dessen Verlauf mindestens ein Teil (18) des äußeren Rands (16) des Falzes (8) des ersten Blechelements (7) derart abgeschrägt wird, dass er nicht von dem äußeren Rand (4) des Falzes (3) des Hauptblechelements (2) aufgrund der Toleranzintervalle oder IT, die sowohl beim Stanzen des Elements zu ± 1 mm als auch bei Zusammenbau-/Beschlagarbeiten in der Höhe von ± 1,5 mm auftreten, vorsteht.

8. Verfahren nach Anspruch 7, wobei das Abschrägen des äußeren Rands (16) des Falzes (8) des ersten Blechelements (7) bei dem Zuschneidevorgang ausgeführt wird.
